# EUROPEAN PATENT SPECIFICATION

(11) **EP 0 780 688 B1**
(45) Date of publication and mention of the grant of the patent: **25.06.2003**
(21) Application number: 96308794.5
(22) Date of filing: 04.12.1996
(51) Int. Cl.: G01P 3/42, G11B 7/085

(54) **Velocity detector for sled motor**
Geschwindigkeitsdetektor für Schlittenantriebsmotor
Détecteur de vitesse d'un moteur d'avancement de chariot

(30) Priority: 22.12.1995 KR 9554744
(43) Date of publication of application: 25.06.1997
(73) Proprietor: SAMSUNG ELECTRONICS CO., LTD., Suwon-City, Kyungki-do (KR)
(72) Inventor: Cho, Gea-Ok, Suwon-city, Kyungki-do (KR)
(74) Representative: Chugg, David John

(56) References cited:
- DE-A- 3 921 410
- US-A- 4 025 819
- US-A- 4 228 396
- PATENT ABSTRACTS OF JAPAN vol. 010, no. 076 (P-440), 26 March 1986 & JP 60 216260 A (HITACHI SEISAKUSHO KK), 29 October 1985

## Description

The present invention generally relates to an optical reproducer such as a CD-ROM, DVDP, etc. and, more particularly, to a velocity detector of a sled motor and a velocity detecting method thereof. The present application is based upon Korean Application No. 54744/1995.

In general, an optical reproducer moves its optical pickup to a corresponding position by controlling a sled motor upon accessing data recorded on a disc. To control the sled motor, it is necessary to detect a signal transferred from the sled motor. Thus, the velocity detector for the sled motor is accordingly required to meet the requirement.

In the prior art, signals provided from hole sensors which generate electrical signals respectively in response to the sled motor's rotation velocity are differentiated and multiplexed by a differentiator, and amplified by an amplifier, to thereby detect the velocity of the sled motor. Herein, the signals provided from the hole sensors have phases different from each other.

However, in the prior art velocity detecting method, there is a problem that an offset is generated between the channels because signals having four different phases are differentiated by differentiators corresponding thereto respectively, and this offset is then passed through the multiplexer. Such an offset brings about a serious problem that an access error of an optical reproducer often occurs because an output signal provided from the multiplexer is DC-coupled with the back amplifier, such offset appears far greater as a result of amplification by the back amplifier, and accordingly an accurate velocity is not detected.

United States Patent 4 228 396 describes an electronic tachometer utilising an optical encoder disk and transducer connected to a movable mechanical element. The transducer produces a pair of triangular waves of fixed relative phase, each having slopes proportional to the velocity of the mechanical element. The triangular waves are differentiated and the resultant signals are sampled by gating pulses derived from the triangular waves themselves. The triangular waves are amplified in paired amplifiers and differentiated in a paired differentiators.

Japanese patent document JP 60 216 260 describes a speed detection method to detect speed over a wide range with good accuracy while suppressing ripple, by detecting only the inclinations of multi-phase output signals displaced by 90° in the phase of an alternating waveform and differentiating the same by a single differentiation circuit. The method is performed by a circuit comprising reversal circuits which are input A- and B-phase signals and output A'- B'- phase signals being reversal signals. An analogue switch group takes out inclinations in the vicinity of zero crosses of the A'- and B'- signals in the same direction to output an AB signal. Further, a switch control signal generation circuit consisting of comparators and a switch selection circuit respectively inputting A-and B- phase signals, and A'- and B'- phase signals are provided. The single differentiation circuit performs the differentiation of signals A, B and a slit removing circuit is provided.

Accordingly, it is an aim of embodiments of the present invention to provide an optical reproducer which can solve or reduce the prior art problems as described above.

It is another aim to provide a velocity detector of a sled motor which has an improved an offset and velocity detecting method.

According to a first aspect of the invention there is provided a velocity detecting method of a sled motor, comprising steps of: receiving and multiplexing signals having phases different from each other; and differentiating said multiplexed signals; characterised by in the step of receiving and multiplexing signals, the received signals are received from sensors; amplifying the differentiated signals; filtering and integrating said amplified signal to remove switching noise components; and receiving and amplifying an output of said integrating step and an applied output, to thereby produce a velocity detecting signal.

According to a second aspect of the invention there is provided a velocity detector of a sled motor, comprising:a multiplexer for receiving and multiplexing signals having phases different from each other; and a differentiator for differentiating an output signal outputted from said multiplexer; characterised by: the multiplexer receiving from sensors the signals having phases different from each other; a first amplifier for amplifying said differentiated signal outputted from said differentiator; an integrator for filtering and integrating said amplified signal outputted from said first amplifier; and a third amplifier for receiving an output of a second amplifier which amplifies the output of said integrator and an applied signal and outputting a velocity detecting signal.

For a better understanding of the invention, and to show how embodiments of the same may be carried into effect, reference will now be made, by way of example, to the accompanying diagrammatic drawings, in which:
Figure 1 is a circuit diagram of a velocity detector according to an embodiment of the present invention; and
Figures 2A-2D are waveform diagrams of detected signals shown at the respective portions of Figure 1.

Hereinafter, a preferred embodiment of the present invention will be described with reference to the drawings attached. In the following description, an apparatus and method of the present invention will be described in detail to aid a thorough understanding of the present invention. However, it will be apparent for those skilled in this art that numerous variations from the details described may be made whilst still enabling performance of the present invention. Furthermore, the characteristics of basic circuit elements and construction of circuits known well in this technical field will not be described in any detail so as to avoid obscuring of the present invention.

First, the basic principle of the present invention is to break off an offset and detects an accurate velocity by not differentiating signals provided from hole sensors at the front end.

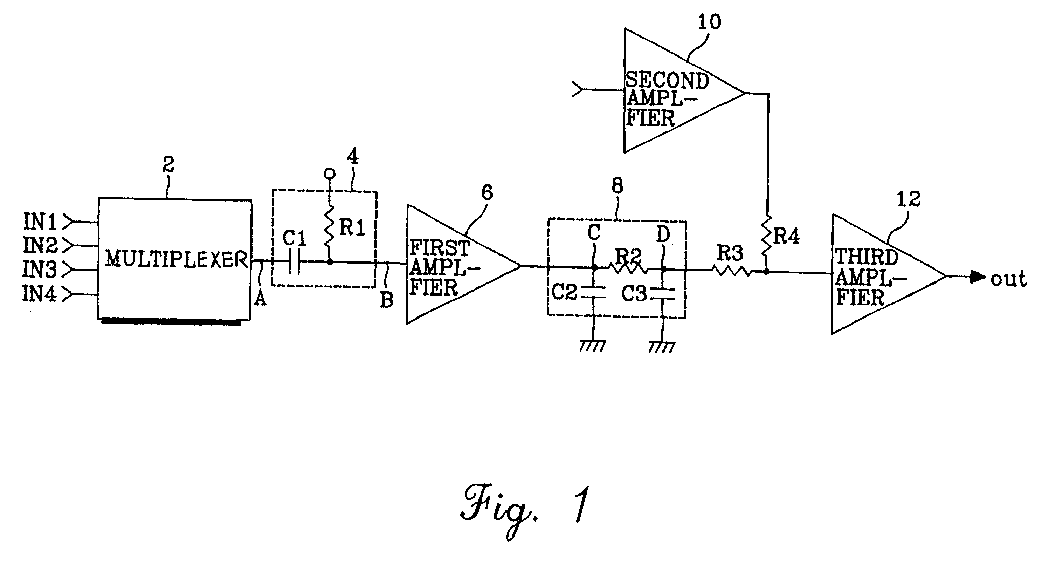

Figure 1 shows a circuit of an embodiment of a velocity detector of a sled motor according to the present invention and Figures 2A-2D are waveform diagrams of detected signals shown at the respective portions of Figure 1.

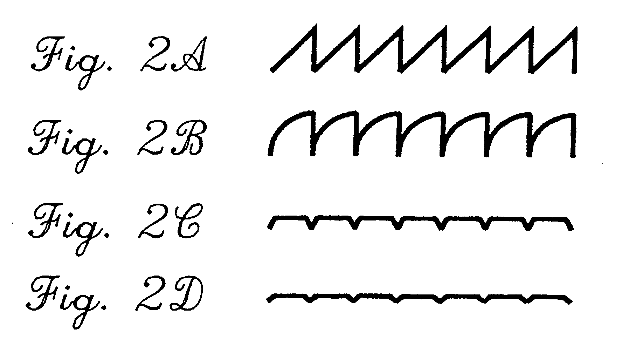

Referring to Figure 1, there -are provided signals having phases different from each other on input terminals IN 1-4, for example, 90°, 180°, 270°, 360° phases, provided by way of hole sensors. A multiplexer 2 transfers a signal shown in Figure 2A by receiving and multiplexing those input signals. According to embodiments of the present invention, input signals are received intact to produce only a waveform of a signal required in detecting the velocity of the sled motor through the multiplexer 12. A differentiator 4 composed of the capacitor C1 and a resistor R1 differentiates a signal shown in Figure 2A and provides a signal shown in Figure 2B at a node B. This results in breaking off a DC offset component. A first amplifier 6 outputs a signal shown in Figure 2C at node C by amplifying the signal shown in Figure 2B by scores of times. A unit 8 which filters and integrates the amplified signal outputted from the first amplifier 6 is composed of capacitors C2 and C3, and a resistor R2. Herein, the capacitor C2 is for filtering noise, the capacitor C3 and resistor R2 are integrators. Accordingly, a signal shown in Figure 2D is output from a node D.

The output of a second amplifier 10 for amplifying an applied signal and the output signal of the unit 8 is provided to a third amplifier 12 through resistors R3, R4, then to be outputted as a velocity detecting signal.

According to the present invention as described above, there is an effect of obtaining an offset-improved velocity detecting signal.

Therefore, it should be understood that the present invention is not limited to the particular embodiment disclosed herein as the best mode contemplated for carrying out the present invention, but rather that the present invention is not limited to the specific embodiments described in this specification except as defined in the appended claims.

## Claims

1. A velocity detecting method of a sled motor, comprising steps of:
receiving and multiplexing signals having phases different from each other; and
differentiating said multiplexed signals;
**characterised by**:
in the step of receiving and multiplexing signals, the received signals are received from sensors;
amplifying the differentiated signals;
filtering and integrating said amplified signal to remove switching noise components; and
receiving and amplifying an output of said integrating step and an applied output, to thereby produce a velocity detecting signal.

2. A velocity detector of a sled motor, comprising:
a multiplexer (2) for receiving and multiplexing signals (IN1 - IN4) having phases different from each other; and
a differentiator (4) for differentiating an output signal outputted from said multiplexer (2);
**characterised by**:
the multiplexer receiving from sensors the signals (IN1 - IN4) having phases different from each other;
a first amplifier (6) for amplifying said differentiated signal outputted from said differentiator (4);
an integrator (8) for filtering and integrating said amplified signal outputted from said first amplifier (6); and
a third amplifier (12) for receiving an output of a second amplifier (10) which amplifies the output of said integrator (8) and an applied signal and outputting a velocity detecting signal.

## Patentansprüche

1. Geschwindigkeits-Detektionsverfahren eines Schlittenmotors, das die folgenden Schritte umfasst:
Empfangen und Multiplexen von Signalen mit voneinander verschiedenen Phasen, und
Differenzieren der gemultiplexten Signale,
**dadurch gekennzeichnet, dass**
in dem Schritt zum Empfangen und Multiplexen von Signalen die empfangenen Signale von Sensoren empfangen werden,
und weiter **gekennzeichnet durch**
Verstärken der differenzierten Signale;
Filtern und Integrieren des verstärkten Signals, um Schaltgeräusch-Komponenten zu entfernen, und
Empfangen und Verstärken eines Ausgangs des Integrationsschrittes und eines angelegten Ausgangs, um **dadurch** ein Geschwindigkeits-Erfassungssignal zu erzeugen.

2. Geschwindigkeitsdetektor eines Schlittenmotors, der umfasst:
einen Multiplexer (2) zum Empfangen und Multiplexen von Signalen (IN1-IN4) mit voneinander verschiedenen Phasen, und
einen Differenzierer (4) zum Differenzieren eines von dem Multiplexer (2) ausgegebenen Ausgangssignals,
**dadurch gekennzeichnet, dass**
der Multiplexer die Signale mit voneinander verschiedenen Phasen von Sensoren empfängt, und weiter **gekennzeichnet durch**
einen ersten Verstärker (6), der das von dem Differenzierer (4) ausgegebene differenzierte Signal verstärkt,
einen Integrator (8), der das von dem ersten Verstärker (6) ausgegebene verstärkte Signal filtert und integriert, und
einen dritten Verstärker (12), der einen Ausgang eines zweiten Verstärkers (10) empfängt und den Ausgang des Integrators (8) und ein angelegtes Signal verstärkt und ein Geschwindigkeits-Erfassungssignal ausgibt.

## Revendications

1. Procédé de détection de la vitesse d'un moteur-traîneau, comprenant les étapes suivantes :
la réception et le multiplexage de signaux ayant des phases différentes les unes des autres ; et
la différenciation desdits signaux multiplexés ;
**caractérisé par** :
lors de l'étape de réception et de multiplexage des signaux, le fait que les signaux reçus sont reçus à partir de détecteurs ;
l'amplification des signaux différenciés ;
le filtrage et l'intégration dudit signal amplifié afin d'éliminer les composantes de bruit de commutation ; et
la réception et l'amplification d'une sortie de ladite étape d'intégration et d'une sortie appliquée, de façon à produire par conséquent un signal de détection de vitesse.

2. Détecteur de la vitesse d'un moteur-traîneau, comprenant :
un multiplexeur (2) pour recevoir et multiplexer des signaux (IN1 à IN4) ayant des phases différentes les unes des autres ; et
un différenciateur (4) pour différencier un signal de sortie délivré en sortie dudit multiplexeur (2) ;
**caractérisé par :**
**le fait que** le multiplexeur reçoit à partir de détecteurs les signaux (IN1 à IN4) ayant des phases différentes les unes des autres ;
un premier amplificateur (6) pour amplifier ledit signal différencié délivré en sortie dudit différenciateur (4) ;
un intégrateur (8) pour filtrer et intégrer ledit signal amplifié délivré en sortie dudit premier amplificateur (6) ; et
un troisième amplificateur (12) pour recevoir une sortie d'un deuxième amplificateur (10) qui amplifie la sortie dudit intégrateur (8) et un signal appliqué et délivrer en sortie un signal de détection de vitesse.
